(19) Europäisches Patentamt
European Patent Office
Office européen des brevets

(11) **EP 1 281 853 B1**

(12) **EUROPÄISCHE PATENTSCHRIFT**

(45) Veröffentlichungstag und Bekanntmachung des Hinweises auf die Patenterteilung:
**26.05.2010  Patentblatt 2010/21**

(51) Int Cl.:
*F02D 41/10* (2006.01)     *F02D 41/40* (2006.01)
*F02D 37/02* (2006.01)

(21) Anmeldenummer: **02015755.8**

(22) Anmeldetag: **13.07.2002**

(54) **Verfahren und Vorrichtung zur Steuerung einer Antriebseinheit eines Fahrzeugs**

Method and device for controlling a drive unit of a vehicle

Procédé et dispositif de commande d'une unité d'entraînement d'un véhicule

(84) Benannte Vertragsstaaten:
**DE FR GB IT**

(30) Priorität: **04.08.2001   DE 10138493**

(43) Veröffentlichungstag der Anmeldung:
**05.02.2003   Patentblatt 2003/06**

(73) Patentinhaber: **ROBERT BOSCH GMBH
70442 Stuttgart (DE)**

(72) Erfinder:
• **Wagner, Horst
70469 Stuttgart (DE)**
• **Fehrmann, Ruediger
71229 Leonberg (DE)**

(56) Entgegenhaltungen:
**DE-A1- 19 612 455     DE-A1- 19 739 564
DE-A1- 19 814 743     US-A- 5 899 830**

**Beschreibung**

Stand der Technik

Die Erfindung betrifft ein Verfahren und eine Vorrichtung zur Steuerung einer Antriebseinheit eines Fahrzeugs gemäß den Oberbegriffen der unabhängigen Ansprüche.

Verfahren und eine Vorrichtung zur Steuerung der Antriebseinheit eines Fahrzeugs, mit einem Stellelement zur Beeinflussung der Leistungsabgabe der Antriebseinheit, Fahrzeugs ist beispielsweise aus der DE 195 34 633 und US 5,899,830 bekannt. Dort ist ausgehend von der Stellung eines Bedienelements ein leistungsbestimmendes Signal vorgebbar. Die Ansteuerung des Stellelements erfolgt abhängig von dem gefilterten leistungsbestimmenden Signal.

Des weiteren ist aus der DE 195 34 633 A1 eine entsprechende Vorgehensweise bekannt, bei der ein impulsförmiger Verlauf der Einspritzmenge vorgeschlagen wird, um ein weiches Anlegen des Motors zu ereichen, wobei danach die eingespritzte Kraftstoffmenge zur Beschleunigung unverzögert freigegeben wird.

Bei diesen beschriebenen Verfahren und der dort beschriebenen Vorrichtung werden Momentenänderungen des Motors durch Tiefpassfilterung der Fahrervorgabe verzögert.

Durch die Tiefpassfilterung kommt es zu einer Beeinträchtigung der Spontanität des Fahrverhaltens. Darüber hinaus ist bei modernen Antriebsstrangkonzepten eine Wechselwirkung zwischen Motorbewegung und Antriebsstrang zu beobachten, so dass sich der Lastschlag noch verstärken kann.

Dadurch dass die Filterung des leistungsbestimmenden Signals derart erfolgt, dass der Betrag der zulässigen Steigung an einem Betriebspunkt minimal ist und mit dem Abstand zwischen dem leistungsbestimmenden Signal und dem Betriebspunkt gemäß der Beziehung MAX = a * D$^2$ + b ansteigt, wobei es sich bei den Größen a und b um applizierbare Koeffizienten handelt, kann das Verhalten des Systems bestehend aus Antriebseinheit und Fahrzeug deutlich verbessert werden. Insbesondere können Geräusche, Beschleunigungsimpulse und Ruckelschwingungen deutlich vermindert werden. Wird lediglich ein Schwellenwert vorgeben kann das Verhalten in einem Betriebspunkt verbessert werden. Durch die Vorgabe mehrerer verbessert werden. Ferner ist ein variable Begrenzung abhängig vom Abstand zum jeweiligen Betriebspunkt möglich. So ist es besonders vorteilhaft im Bereich des jeweiligen Betriebspunkt eine Begrenzung auf einen deutlich kleineren Wert vorzunehmen als bei einem großen Abstand vom Betriebspunkt.

Vorzugsweise erfolgt die Begrenzung derart, dass die Änderung, das heißt der Anstieg und/oder der Abfall, des Moments auf höchstzulässige Werte begrenzt wird. Vorzugsweise erfolgt in der Nähe des Betriebspunkts eine Begrenzung auf einen kleinen Wert. Im großen Abstand vom Betriebspunkt erfolgt nahezu keine Begrenzung.

Zeichnung

Die Erfindung wird nachstehend anhand der in der Zeichnung dargestellten Ausführungsformen erläutert. Es zeigen Figur 1 ein Übersichtsblockschaltbild einer Vorrichtung zur Durchführung der erfindungsgemäßen Vorgehensweise, Figur 2 eine detaillierte Darstellung als Blockdiagramm der erfindungsgemäßen Vorrichtung und Figur 3 ein Flußdiagramm zur Verdeutlichung der erfindungsgemäßen Vorgehensweise.

Beschreibung der Ausführungsbeispiele

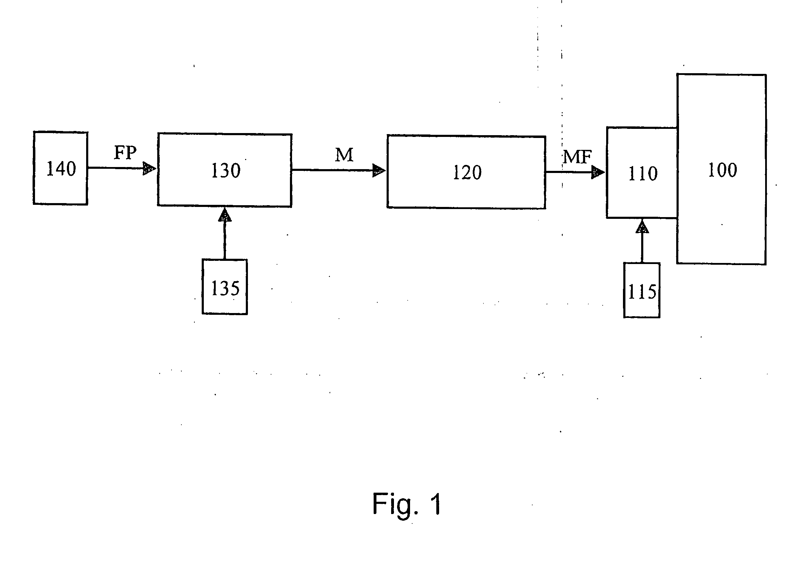

Figur 1 zeigt ein Übersichtsblockschaltbild einer Vorrichtung zur Steuerung der Antriebseinheit eines Fahrzeugs, bei der die erfindungsgemäße Vorgehensweise angewendet werden kann. Die erfindungsgemäße Vorgehensweise ist am Beispiel einer Dieselbrennkraftmaschine beschrieben. Die erfindungsgemäße Vorgehensweise kann aber auch bei anderen Typen von Brennkraftmaschinen, insbesondere bei fremdgezündeten Brennkraftmaschinen, eingesetzt werden.

Mit 100 ist eine Brennkraftmaschine bezeichnet, welche unter anderem mit einem Steller 110 verbunden ist. Der Steller 110 verarbeitet Signale verschiedener Sensoren 115 sowie ein Signal MF, das von einem Filtermittel 120 bereitgestellt wird. Dem Filtermittel 120 wird als Eingangsgröße das Ausgangssignal M einer Mengenvorgabe 130 zugeleitet. Das Filtermittel verarbeitet weiter die Ausgangssignale verschiedener Sensoren 125. Die wird Mengenvorgabe 130 von einem Fahrpedalstellungssensor 140 und/oder verschiedenen Sensoren 135 Signalen beaufschlagt.

Ausgehend von der Stellung des Fahrpedals erzeugt der Fahrpedalstellungssensor 140 ein Signal FP bzgl. der Fahrpedalstellung. Der Fahrpedalstellungssensor kann beispielsweise als Drehpotentiometer ausgeführt sein. In diesem Fall wird ein Widerstandswert und/oder der Spannungsabfall am Potentiometer als Signal verwendet.

Ausgehend von dem Ausgangssignal des Fahrpedalstellungssensor 140 und den Ausgangssignalen der verschiedenen Sensoren 135 berechnet die Mengenvorgabe 130 das Signal M, das ein Maß für die von der Brennkraftmaschine gewünschte Leistung darstellt. Die Vorgabe der Kraftstoffmenge M erfolgt beispielsweise abhängig von Sensoren 135 die verschiedene Temperaturwerte, Druckwerte und weitere Betriebszustände erfassen.

Bei einer Dieselbrennkraftmaschine handelt es sich hierbei vorzugsweise um die einzuspritzende Kraftstoffmenge. Bei einer fremdgezündeten Brennkraftmaschine handelt es sich hierbei vorzugsweise um ein Signal, das die Drosselklappenstellung oder der Zündzeitpunkt anzeigt. Bei einer besonders vorteilhaften Ausgestaltung kann auch eine Momentengröße, die den Momentenwunsch des Fahrers charakterisiert anstelle der Größe M verarbeitet werden. Erfindungsgemäß ist vorgesehen, dass eine Größe, die ein leistungsbestimmendes Signal charakterisiert verarbeitet wird.

Um den Lastschlag zu vermeiden, darf die Einspritzmenge bei einer Dieselbrennkraftmaschine nicht sprungartig freigegeben werden. Dabei genügt es, die Einspritzmenge nur in dem Mengenbereich zu filtern, in dem die Brennkraftmaschine sich relativ zur Karosserie bewegt. Diese Filterung des Kraftstoffmengensignals erfolgt durch das Filtermittel 120.

Bei dem Steller 110 handelt es sich beispielsweise um eine die einzuspritzende Kraftstoffmenge festlegende Kraftstoffzumeßeinrichtung. Hierbei kann es sich beispielsweise um ein Magnetventil oder einen Piezoaktor handeln. Abhängig von dem gefilterten Kraftstoffmengensignal MF und den Ausgangssignalen weiterer Sensoren 115 mißt der Steller 110 die entsprechende Kraftstoffmenge der Brennkraftmaschine 100 zu.

Die erfindungsgemäße Vorgehensweise ist nicht auf die Anwendung bei Diesel-Brennkraftmaschinen beschränkt. Sie kann auch bei anderen Brennkraftmaschinen eingesetzt werden. Ferner ist sie nicht auf die Anwendung bei der Kraftstoffeinspritzung beschränkt. Sie kann auch bei anderen die Leistungsabgabe bestimmenden Größen, wie beispielsweise die Drosselklappenstellung oder den Zündwinkel eingesetzt werden

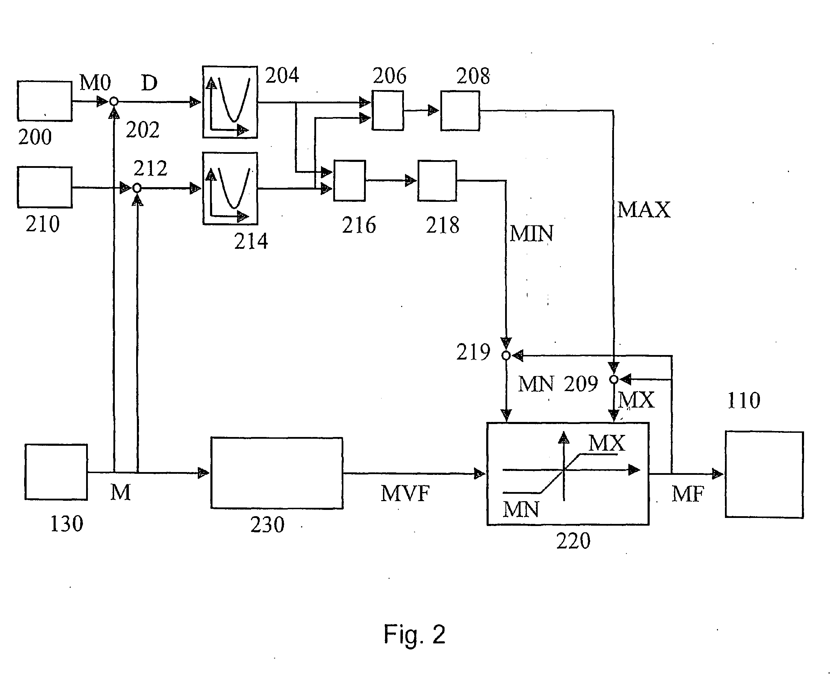

In Figur 2 ist das Filtermittel 120 detaillierter dargestellt. Bereits in Figur 1 beschriebene Elemente sind mit entsprechenden Bezugszeichen bezeichnet. Das Ausgangssignal M der Momentenvorgabe 130 gelangt zu dem eigentlichen Filter 230. Das Ausgangssignal MVF des Filters 230 gelangt über eine Begrenzung 220 als gefiltertes Moment MF zu dem Steller 110.

Desweiteren gelangt die Momentengröße M zu einem ersten Eingang eines ersten Verknüpfungspunktes 202, an dessen zweiten Eingang das Ausgangssignal eines ersten Speichers 200 anliegt. Mit dem Ausgangssignal des Verknüpfungspunktes 202 wird eine erste Vorgabe 204 beaufschlagt. Das Ausgangssignal der ersten Vorgabe 204 gelangt zu einer ersten Minimalauswahl 206 und zu einer zweiten Minimalauswahl 216. Das Ausgangssignal der ersten Minimalauswahl 206 gelangt zu einer Umrechnung 208. Mit dem Ausgangssignal der Umrechnung 208 wird ein erster Eingang eines Verknüpfungspunktes 209 beaufschlagt, an dessen zweiten Eingang das gefilterte Moment MF anliegt. Mit dem Ausgangssignal des Verknüpfungspunktes 209 wird die Begrenzung 220 beaufschlagt.

Desweiteren gelangt die Momentengröße M zu einem ersten Eingang eines zweiten Verknüpfungspunktes 212, an dessen zweiten Eingang das Ausgangssignal eines zweiten Speichers 210 anliegt. Mit dem Ausgangssignal des Verknüpfungspunktes 212 wird eine zweite Vorgabe 214 beaufschlagt. Das Ausgangssignal der zweiten Vorgabe 214 gelangt zu der ersten Minimalauswahl 206 und zu der zweiten Minimalauswahl 216. Das Ausgangssignal der zweiten Minimalauswahl 216 gelangt zu einer Umrechnung 218. Mit dem Ausgangssignal der Umrechnung 218 wird ein erster Eingang eines Verknüpfungspunktes 219 beaufschlagt, an dessen zweiten Eingang das gefilterte Moment MF anliegt. Mit dem Ausgangssignal des Verknüpfungspunktes 219 wird die Begrenzung 220 beaufschlagt.

Es wurde erkannt, dass es sich bei dem Lastschlag um ein Stoßphänomen im Antriebsstrang bzw. den Aufhängungen der Antriebskomponenten an der Karosserie handelt. Diese Stöße treten auf, wenn Komponenten des Antriebsstranges mit hoher Differenzgeschwindigkeit aufeinander treffen. Beispiele dafür sind ein Lastwechsel oder das Schließen der Kupplung. Die Auswirkungen des Lastschlages stellen eine Komfortbeeinträchtigung durch entstehende Geräusche, einen Beschleunigungsimpuls in Fahrtrichtung und/oder Anregungen von Ruckelschwingungen im Antriebsstrang dar.

Erfindungsgemäß wurde erkannt, dass der Betrag des Stoßes abhängig von der Geschwindigkeitdifferenz der Körper beim Stoß ist. Differenzgeschwindigkeiten bauen sich beispielsweise beim Lastwechsel bei der Überwindung der Lose im Antriebsstrang auf. Erfindungsgemäß ist deshalb vorgesehen, dass bei der Überbrückung der Lose im Lastwechsel nur geringe Drehmomentänderungen auftreten. Durch die geringen Drehmomentänderungen treten nur geringe Differenzgeschwindigkeiten und damit ein kleiner Beitrag des Stoßes auf. Dies wird dadurch erreicht, dass im Bereich der Lose die Änderung des Moments, d. h. die Steigung des Moments auf einen höchstzulässigen Wert begrenzt wird.

Entsprechend tritt in bestimmten Fahrsituationen bei Fahrzeugen mit Automatikgetriebe die Situation ein, dass ein vorgegebener Schlupf eingestellt wird. Wird das Motormoment zu schnell abgesenkt, so kann die Schlupfregelung nicht folgen. Es kommt zu einem unbeabsichtigtem Schließen der Wanderkupplung und damit zu einem Stoß.

Die erfindungsgemäße Lastschlagdämpfung sorgt durch die Begrenzung der Änderung des Moments für eine langsame Absenkung des Motormoments in diesem Betriebszustand und ermöglicht dadurch der Kupplungsregelung den Schlupf einzuhalten. Dadurch wird der Stoß verhindert.

Die benötigten geringen Gradienten des Moments, d. h. der Änderung des Moments an verschiedenen Betriebspunkten wird erfindungsgemäß durch eine Steigungsbegrenzung realisiert. Erfindungsgemäß ist vorgesehen, dass die Steigungsbegrenzung eine stetig monotone Funktion darstellt, die vom Abstand des Moments vom jeweiligen Betriebspunkt abhängt. Sie ist derart ausgebildet, dass es zu einem sanften Eingreifen der Begrenzung in der Nähe des oder der Betriebspunkte kommt.

Beeinträchtigungen des Komforts durch Knicke im Signalverlauf, wie sie bei rampenförmigen Signalverläufen auftreten, werden vermieden. Dies bedeutet, dass der Schwellenwert für das zulässige Moment abhängig von der Differenz zwischen dem aktuellen Moment M und einem vorgegebenen Wert M0 für das Moment vorgebbar ist. Der vorgegebene Wert M0 für das Moment ist durch den jeweiligen Betriebspunkt definiert.

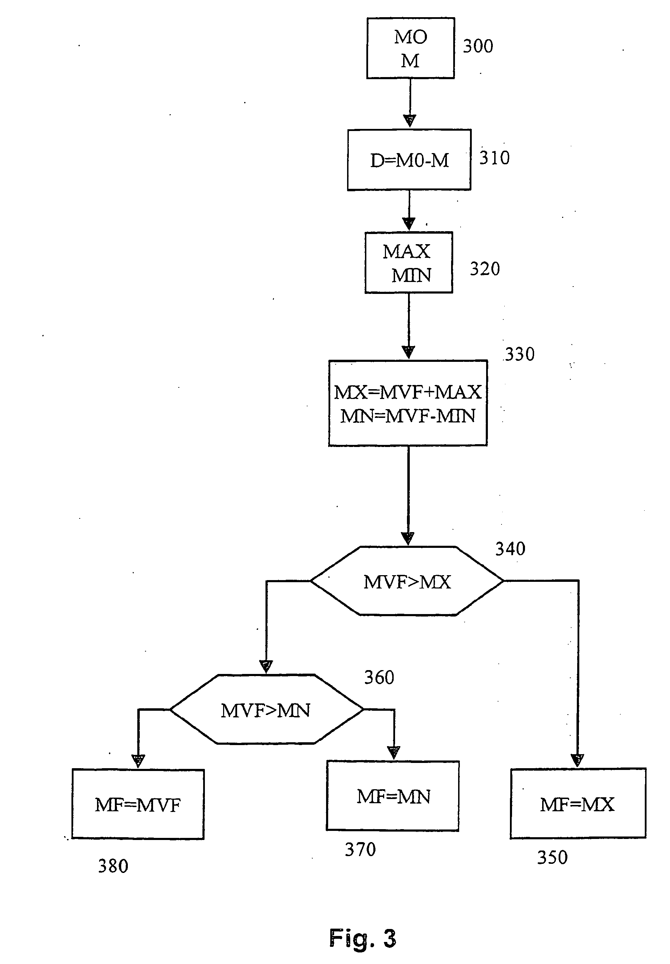

Im Folgenden wird die Funktionsweise der in Figur 2 dargestellten Ausführungsform am Beispiel des Flussdiagrammes der Figur 3 erläutert. In einem ersten Schritt 300 wird von der Momentenvorgabe 130 das aktuelle Moment M bestimmt. Ferner wird aus dem Speicher 200 und/oder aus dem Speicher 210 das Moment M0 und/oder das Moment 210, das den ausgewählten Betriebspunkt und/oder die ausgewählten Betriebspunkte charakterisieren, ausgelesen. Im folgenden werden lediglich zwei ausgewählte Betriebspunkte betrachtet. Besonders vorteilhaft ist es, wenn nicht nur an zwei, sondern an einem oder an mehreren Betriebspunkten eine entsprechende Begrenzung erfolgt. Die Vorgehensweise kann bei jeder beliebigen Anzahl von Betriebspunkten eingesetzt werden.

Im anschließenden Schritt 310 wird in dem Verknüpfungspunkt 202 und/oder 212 die Differenz D zwischen dem Moment M0 des ausgewählten Betriebspunkt und dem aktuellen Moment M bestimmt. Anschließend liest die erste Vorgabe 204 in Schritt 320 die maximale Steigung MAX des Moments aus und die zweite Vorgabe 204 liest in Schritt 320 die minimale Steigung MIN des Moments aus.

Die erste und/oder zweite Vorgabe können als Kennfeld oder als Funktion realisiert sein. Besonders vorteilhaft ist es, die maximale Steigung MAX und/oder die minimale Steigung MIN als quadratische Funktion über dem Abstand zum Bezugspunkt definiert ist. Insbesondere gilt für den Zusammenhang zwischen der maximalen Änderung MAX des Moments und dem Abstand D zwischen dem Moment und dem Betriebspunkt folgende Beziehung.

$$MAX = a * D^2 + b$$

Dabei handelt es sich bei den Größen a und b um applizierbare Koeffizienten.

Die zulässige maximale Steigung MAX ist jeweils definiert für einen Betriebspunkt. Der Betrag der zulässigen Steigung ist am Betriebspunkt minimal und steigt quadratisch mit dem Abstand an. Mit hinreichendem Abstand vom Betriebspunkt erfolgt keine Steigungsbegrenzung.

Vorteilhaft ist es, wenn für unterschiedliche Betriebspunkte unterschiedliche applizierbare Koeffizienten a oder b vorgebbar sind.

Wirken in einem Betriebspunkt mehrere Steigungsbegrenzungen gleichzeitig, so wird die kleinste betragsmäßige Steigung verwendet. Dies wird durch die Minimalauswahlen 206 und 216 gewährleistet.

In dem Schritt 330 wird von dem Block 208 bzw. 218 die Begrenzungswerte berechnet. Hierzu wird der Gradient über einen Zeitschritt integriert und das Ergebnis zum Ausgang des letzten Rechenschritts in den Verknüpfungspunkten 209 und 219 hinzuaddiert. D. h. der Begrenzungswert MX ergibt sich aus dem zuletzt errechneten Ausgangswert MF der Begrenzung und dem im nächsten Rechenschritt zulässigen Wert MAX, der sich ausgehend von dem in der Vorgabe 204 berechneten Wert ergibt.

Auf diesem Wert MX wird dann von der Begrenzung 220 der Wert MVF begrenzt, d. h. erkennt die Abfrage 340, dass der Wert MVF größer als der maximale Grenzwert MX ist, so wird das Ausgangssignal MF im Schritt 350 auf den Maximalwert MX gesetzt. Ist der Wert nicht größer als der Maximalwert MX, so überprüft die Abfrage 360, ob der Wert MVF kleiner als der Minimalwert MN ist. Ist dies der Fall, so wird der Wert MF auf den Wert MN gesetzt. Andernfalls wird in Schritt 380 die Eingangsgröße MVF als Ausgangssignal MF verwendet.

In der beschriebenen Ausführungsform wird die Begrenzung am Beispiel des Drehmoments beschrieben. Erfindungsgemäß kann die Vorgehensweise auch bei anderen Größen, wie beispielsweise der eingespritzten Kraftstoffmenge und/oder der Fahrpedalstellung FP oder andere diese Größen charakterisierenden Größen verwendet werden.

Das Filter 230 besitzt vorzugsweise PDT1 Verhalten. Insbesondere kann auch vorgesehen sein, dass auch die Eigenschaften des Filters 230 abhängig sind vom Abstand, dessen Betriebspunkt und dem aktuellen Moment gewählt werden.

**Patentansprüche**

1. Verfahren zur Steuerung der Antriebseinheit eines Fahrzeugs, mit einem Stellelement (110) zur Beeinflussung der Leistungsabgabe der Antriebseinheit, wobei ausgehend von der Stellung eines Bedienelements (140) ein leistungsbestimmendes Signal (M) vorgebbar ist, und die Ansteuerung des Stellelements (110) abhängig von dem gefilterten leistungsbestimmenden Signal (MF) erfolgt, **dadurch gekennzeichnet, dass** die Filterung des leistungsbestimmenden Signals (M) derart erfolgt, dass eine Steigungsbegrenzung des leistungsbestimmenden Signals (M) derart erfolgt, dass der Betrag der zulässigen Steigung (MAX) an einem Betriebspunkt (M0) minimal ist und mit dem Abstand (D) zwischen dem leistungsbestimmenden Signal (M) und dem Betriebspunkt (M0) gemäß der Beziehung MAX = a * D² + b ansteigt, wobei es sich bei den Größen a und b um applizierbare Koeffizienten handelt.

2. Verfahren nach Anspruch 1, **dadurch gekennzeichnet, dass** der Betriebspunkt wenigstens durch das leistungsbestimmende Signal (M) bestimmt wird.

3. Verfahren nach einem der vorhergehenden Ansprüche, **dadurch gekennzeichnet, dass** der Schwellenwert abhängig von der Differenz zwischen dem aktuellen leistungsbestimmenden Signal und wenigstens einem vorgegebenen Wert für das leistungsbestimmende Signal vorgebbar ist.

4. Vorrichtung zur Steuerung der Antriebseinheit eines Fahrzeugs, mit einem Stellelement zur Beeinflussung der Leistungsabgabe der Antriebseinheit, mit Mitteln, die ausgehend von der Stellung eines Bedienelements ein leistungsbestimmendes Signal vorgeben, und die Ansteuerung des Stellelements abhängig von dem gefilterten leistungsbestimmenden Signal durchführen, **dadurch gekennzeichnet, dass** Filtermittel vorgesehen sind, die das leistungsbestimmende Signal derart filtern, dass eine Steigungsbegrenzung des leistungsbestimmenden Signals (M) derart erfolgt, dass der Betrag der zulässigen Steigung (MAX) an einem Betriebspunkt (M0) minimal ist und mit dem Abstand (D) zwischen dem leistungsbestimmenden Signal (M) und dem Betriebspunkt (M0) gemäß der Beziehung $MAX = a * D^2 + b$ ansteigt, wobei es sich bei den Größen a und b um applizierbare Koeffizienten handelt.

**Claims**

1. Method for controlling the drive unit of a vehicle, having an actuating element (110) for influencing the power output of the drive unit, wherein a power-determining signal (M) can be predefined on the basis of the position of an operator control element (140), and the actuation of the actuating element (110) takes place as a function of the filtered power-determining signal (MF), **characterized in that** the power-determining signal (M) is filtered in such a way that gradient limitation of the power-determining signal (M) takes place in such a way that the absolute value of the permissible gradient (MAX) is minimal at one operating point (M0) and increases as a function of the distance (D) between the power-determining signal (M) and the operating point (M0) in accordance with the relationship $MAX = a * D^2 + b$, wherein the variables a and b are coefficients which can be applied.

2. Method according to Claim 1, **characterized in that** the operating point is determined at least by the power-determining signal (M).

3. Method according to one of the preceding claims, **characterized in that** the threshold value can be predefined as a function of the difference between the current, power-determining signal and at least one predefined value for the power-determining signal.

4. Device for controlling the drive unit of a vehicle, having an actuating element for influencing the power output of the drive unit, having means which predefine a power-determining signal as a function of the position of an operator control element, and carry out the actuation of the actuating element as a function of the filtered, power-determining signal, **characterized in that** filter means are provided which filter the power-determining signal in such a way that gradient limitation of the power-determining signal (M) takes place in such a way that the absolute value of the permissible gradient (MAX) is minimal at one operating point (M0) and increases as a function of the distance (D) between the power-determining signal (M) and the operating point (M0) in accordance with the relationship $MAX = a * D^2 + b$, wherein the variables a and b are coefficients which can be applied.

**Revendications**

1. Procédé de commande de l'unité d'entraînement d'un véhicule avec un élément de réglage (110) qui agit sur la puissance délivrée par l'unité d'entraînement,
un signal (M) qui définit la puissance pouvant être prédéterminé à partir de la position d'un élément de commande (140),
la commande de l'élément de réglage (110) s'effectuant en fonction du signal de détermination de puissance filtré (MF),
**caractérisé en ce que**
le filtrage du signal (M) déterminant la puissance s'effectue en limitant la pente du signal (M) déterminant la puissance de telle sorte que la valeur de la pente admissible (MAX) soit minimale en un point de fonctionnement (M0) et augmente selon la relation $MAX = a * D^2 + b$ avec la distance (D) entre le signal (M) déterminant la puissance et le point de fonctionnement (M0), les grandeurs a et b étant des coefficients applicables.

2. Procédé selon la revendication 1, **caractérisé en ce que** le point de fonctionnement est déterminé au moins par le signal (M) déterminant la puissance.

3. Procédé selon l'une des revendications précédentes, **caractérisé en ce que** la valeur de seuil peut être déterminée en fonction de la différence entre le signal en cours de détermination de la puissance et au moins une valeur prédéterminée du signal déterminant la puissance.

4. Dispositif de commande de l'unité d'entraînement d'un véhicule, qui présente un élément de réglage qui agit sur la puissance délivrée par l'unité d'entraînement et doté de moyens qui, partant de la position d'un élément de commande, imposent un signal déterminant la puissance et exécutent la commande de l'élément de réglage en fonction du signal de détermination de puissance filtré, **caractérisé en ce que** le dispositif présente des moyens de filtrage qui filtrent le signal déterminant la puissance de manière à limiter la pente du signal (M) déterminant la puissance de telle sorte que la valeur de la pente admissible (MAX) soit minimale en un point de fonctionnement (M0) et augmente selon la relation MAX = a $* D^2$ + b avec la distance (D) entre le signal (M) déterminant la puissance et le point de fonctionnement (M0), les grandeurs a et b étant des coefficients applicables.

Fig. 1

EP 1 281 853 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19534633
- US 5899830 A
- DE 19534633 A1